# EUROPÄISCHE PATENTSCHRIFT

(11) **EP 3 356 753 B1**
(45) Veröffentlichungstag und Bekanntmachung des Hinweises auf die Patenterteilung: **17.07.2024**
(21) Anmeldenummer: 16775190.8
(22) Anmeldetag: 27.09.2016
(51) Int. Cl.: F26B 21/04, F26B 21/06, F26B 23/00, F26B 23/02

(54) **VORRICHTUNG ZUR TEMPERIERUNG VON GEGENSTÄNDEN, INSBESONDERE ZUM TROCKNEN VON BESCHICHTETEN FAHRZEUGKAROSSERIEN**
APPARATUS FOR TEMPERING OF OBJECTS, MORE SPECIFICALLY FOR DRYING OF COATED VEHICLE BODIES
DIPOSITIF POUR LE CONDITIONNEMENT THERMIQUE D' OBJETS, PARTICULIÈREMENT POUR SECHER DES CARROSSERIES DE VÉHICULE RECOUVERTES

(30) Priorität: 29.09.2015 DE 102015012466
(43) Veröffentlichungstag der Anmeldung: 08.08.2018
(73) Patentinhaber: Eisenmann GmbH, 71032 Böblingen (DE)
(72) Erfinder: HACK, Eduard Karl, 71088 Holzgerlingen (DE)
(74) Vertreter: Ostertag & Partner Patentanwälte mbB
(86) Internationale Anmeldenummer: PCT/EP2016/073018
(87) Internationale Veröffentlichungsnummer: WO 2017/055301

(56) Entgegenhaltungen:
- EP-A2- 2 775 241
- WO-A2-2010/122121
- DE-A1- 102012 003 299

## Beschreibung

### HINTERGRUND DER ERFINDUNG

### 1. Gebiet der Erfindung

Die Erfindung betrifft eine Vorrichtung zur Temperierung von Gegenständen, insbesondere zum Trocknen von beschichteten Fahrzeugkarosserien.

### 2. Beschreibung des Standes der Technik

Die Erfindung wird nachfolgend vorrangig unter Bezugnahme auf Fahrzeugkarosserien als Gegenstände beschrieben. Hierfür geeignete Temperiervorrichtungen sind beispielsweise aus der WO 2010/122121 A2, der DE 10 2012 003 299 A oder der EP 2 775 241 A2 bekannt. Die Erfindung betrifft aber auch Vorrichtungen für andere Gegenstände, die in einem Produktionsprozess temperiert werden müssen. Unter dem Begriff "Temperieren" wird das Herbeiführen einer Temperaturänderung eines Gegenstandes verstanden. Dabei kann es sich um eine Temperaturerhöhung oder um eine Temperaturverringerung handeln. Unter "temperierter Luft" wird eine solche verstanden, welche die zur Temperierung des Gegenstandes erforderliche Temperatur besitzt.

In der Automobilindustrie werden häufig Fahrzeugkarosserien erwärmt, um Feuchtigkeit von Fahrzeugkarosserien zu entfernen oder die Beschichtung einer solchen Fahrzeugkarosserie zu trocknen. Es können selbstverständlich auch andere feuchte Gegenstände als Fahrzeugkarosserien oder die Beschichtung anderer Gegenstände getrocknet werden.

Der Begriff "Trocknen" soll alle Vorgänge umfassen, bei denen die Beschichtung von Fahrzeugkarosserien, insbesondere ein Lack, zum Aushärten gebracht wird, sei dies durch Austreiben von Lösemitteln oder durch Vernetzen der Beschichtungssubstanz oder dergleichen.

Temperier- oder Trocknungsanlagen sind meist Teil von Lackier- oder Beschichtungsanlagen, diesen Prozessen nachgeschaltet und dienen zum Trocknen, Einbrennen und/oder Aushärten von Beschichtungen oder Klebstoffen auf Gegenständen wie beispielsweise Fahrzeugkarosserien. Eine solche Trocknungsanlage benötigt aufgrund der Größe der Gegenstände und der benötigten Temperaturen erhebliche Mengen an Energie.

### ZUSAMMENFASSUNG DER ERFINDUNG

Es ist eine Aufgabe der Erfindung, eine Vorrichtung zur Temperierung von Gegenständen wie beispielsweise zum Trocknen von beschichteten Fahrzeugkarosserien, anzugeben, die einen verbesserten Energieverbrauch aufweist.

Die Aufgabe wird durch eine Vorrichtung zur Temperierung von Gegenständen gemäß den Merkmalen des unabhängigen Anspruchs 1 gelöst. Die Aufgabe wird auch durch ein Verfahren zur Steuerung einer solchen Vorrichtung zur Temperierung von Gegenständen gemäß den Merkmalen des unabhängigen Anspruchs 13 gelöst. Weitere Ausgestaltungen der Erfindung sind in den entsprechenden abhängigen Ansprüchen angegeben.

Die erfindungsgemäße Vorrichtung zur Temperierung von Gegenständen weist einen Temperierraum, also beispielsweise einen Trockenraum, mit mindestens einem Schleusenbereich auf. Weiter ist eine Frischlufteinrichtung zur Erzeugung einer dem Temperierraum zuführbaren Frischluft und eine Umlufteinrichtung vorgesehen. In der vorliegenden Anmeldung wird unter dem Begriff "Umlufteinrichtung" eine Einrichtung verstanden, die dem Temperierraum Temperierraumabluft entnimmt und eine dem Temperierraum zuführbare Umluft erzeugt. Dabei kann die gesamte entnommene Temperierraumabluft oder nur ein Teil der entnommenen Temperierraumabluft dem Temperierraum wieder zugeführt werden.

Die Vorrichtung weist weiter eine Steuereinrichtung sowie eine Zulufteinrichtung zur Zuführung von Luft zu dem Temperierraum auf. Die Zulufteinrichtung kann beispielsweise eine geeignete Verrohrung, geeignete Düsen, Gebläse, Mischvorrichtungen oder Mischbereiche umfassen.

Ein von der Frischlufteinrichtung erzeugter Frischluftvolumenstrom und ein von der Umlufteinrichtung erzeugter Umluftvolumenstrom sind der Zulufteinrichtung zuführbar. Die Steuereinrichtung ist dazu eingerichtet, den Frischluftvolumenstrom und den Umluftvolumenstrom so zu steuern, dass der dem Temperierraum zugeführte, den Frischluftvolumenstrom und den Umluftvolumenstrom umfassende Gesamtvolumenstrom eine Untergrenze nicht unterschreitet.

Der Gesamtvolumenstrom, der in den Temperierraum eingeleitet wird, setzt sich also aus dem Frischluftvolumenstrom und dem Umluftvolumenstrom zusammen. Die Steuereinrichtung kann beispielsweise zur Steuerung des Gesamtvolumenstroms bei einer notwendigen Reduzierung des Frischluftvolumenstroms den Anteil des Umluftvolumenstroms am Gesamtvolumenstrom erhöhen und so den Gesamtvolumenstrom oberhalb einer Untergrenze halten. Eine Reduzierung des Frischluftvolumenstroms kann beispielsweise bei einer Reduzierung der Temperierleistung der Vorrichtung erfolgen. Gleichzeitig kann eine Erhöhung des Frischluftvolumenstroms mit einer Reduzierung des Umluftvolumenstroms kompensiert werden. Wird die Temperierleistung der Vorrichtung reduziert, entsteht insgesamt weniger abzuführende Abluft, was wiederum eine verringerte Zuführung von Frischluft erfordert.

Die Erfindung sieht vor, dass die Umlufteinrichtung eine Nachverbrennungseinrichtung aufweist, wobei der Nachverbrennungseinrichtung Temperierraumabluft zur thermischen Nachbehandlung zuführbar ist. Der Temperierraum ist so ausgelegt, dass die zu temperierenden Gegenstände in der Regel mittels einer Fördereinrichtung durch den Temperierraum förderbar sind. Während des Temperiervorgangs können aus den zu temperierenden Gegenständen, beispielsweise aus aufgebrachten Beschichtungen wie Lacken oder Klebstoffen organische Verbindungen entweichen. Hierfür weist die Vorrichtung die Nachverbrennungseinrichtung auf. Zur thermischen Nachbehandlung ist der Nachverbrennungseinrichtung Temperierraumabluft des Temperierraums zuführbar. Durch den thermischen Verbrennungsvorgang, der beispielsweise bei Temperaturen über 500 °C, beispielsweise bei 500-700 °C stattfindet und in der Regel Brennstoffe einsetzt, können die in der Temperierraumabluft enthaltene organischen Verbindungen, die auch VOC (volatile organic compound) genannt werden, oxidieren und die Abluft so gereinigt werden. Dabei können auch eine regenerative oder rekuperative Abluftvorwärmung oder Katalysatoren zur Oxidation bei niedrigen Temperaturen eingesetzt werden.

Die Frischlufteinrichtung weist weiter einen Frischluftwärmetauscher auf. Der Frischluftwärmetauscher weist eine Frischluftzuleitung und eine Frischluftableitung auf und ist dazu ausgelegt, dem Temperierraum zuführbare Frischluft mittels Abluft der Nachverbrennungseinrichtung zu temperieren. Der Frischluftwärmetauscher kann in die Frischluftzuleitung integriert sein. Die Menge an Frischluft, die beispielsweise durch einen Ventilator angesaugt wird, kann beispielsweise mittels Stellklappen nach einem solchen Ventilator, mittels einer Dralldrossel an dem Ventilator oder mittels eines Frequenzumrichters an dem Ventilator, welcher die Drehfrequenz des Ventilators regelt, gesteuert werden. Um den Gesamtvolumenstrom konstant zu halten, muss gleichzeitig mit beispielsweis einer Reduzierung des Frischluftanteils der Temperierraumumluftanteil und/oder der Temperierraumabluftanteil am Gesamtvolumenstrom erhöht werden.

Der Temperierraum weist wenigstens einen Temperierraumabschnitt, in der Regel mehrere Temperierraumabschnitte, auf. Jeder Temperierraumabschnitt weist jeweils mindestens eine Temperierraumabluft-Entnahme- und Rückführungseinrichtung auf. Ein Teil der Temperierraumabluft wird über einen Temperierraumabschnitt-Wärmetauscher geleitet. Ein anderer Teil der Temperierraumabluft wird der Nachverbrennungseinrichtung zugeführt. Temperierraumabschnitt und Temperierraumabschnitt-Wärmetauscher sind so verbunden, dass dem Temperierraumabschnitt Temperierraumluft entnehmbar, zur Temperierung durch den Temperierraumabschnitt-Wärmetauscher leitbar und dem Temperierraumabschnitt zuführbar ist. Somit ist die Temperierraumluft dem Temperierraumabschnitt als Umwälzluftstrom wieder in einem Kreislauf zuführbar. Je nach Ausgestaltung der Vorrichtung kann die Zuführung der dem Temperierraum entnommenen Temperierraumluft direkt in dem Temperierraumabschnitt erfolgen, dem die Temperierraumluft entnommen worden ist. Alternativ oder zusätzlich kann die entnommene Temperierraumluft zentral oder an Randabschnitten des Temperierraums, beispielsweise auch als Schleusenluft, wieder zugeführt werden. Ein Teil der Temperierraumabluft, der über die Nachverbrennungseinrichtung gereinigt wird, verlässt als Abgas die Lackieranlage. Die Abwärme der Nachverbrennungseinrichtung wird im Frischluftwärmetauscher genutzt, um die Frischluft zu erwärmen.

Erfindungsgemäß ist vorgesehen, dass die mittels des Temperierraumabschnitt-Wärmetauschers temperierte Temperierraumabluft über eine Leitung von dem Temperierraumabschnitt-Wärmetauscher der mittels des Frischluftwärmetauschers temperierten Frischluft zuführbar ist.

Grundsätzlich bietet die Rückführung der temperierten Temperierraumabluft die Möglichkeit, während des Betriebs der Vorrichtung den durch den Temperierraum geführten Volumenstrom innerhalb eines festgelegten Bereichs zu halten, auch wenn während bestimmter Zeiträume in dem Temperierraum eine geringere Temperierleistung auf Grund von weniger zu temperierenden Gegenständen zur Verfügung zu stellen ist. Die Erwärmung der zu temperierenden Gegenstände erfolgt durch konvektiven Wärmeübertrag aus der erwärmten Temperierraumumluft.Die Leistung einer Temperiervorrichtung wird in der Regel danach ausgelegt, wie groß die zu temperierenden Oberflächen sind. Die Art der zu temperierenden Oberflächen Aₙ, und/oder deren Größe legen fest, wieviele organische Verbindungen (VOC) innerhalb des Temperierraums während des Temperierprozesses freigesetzt werden. Wenn ein Temperierraum ein Fassungsvermögen von n Gegenständen, beispielsweise Fahrzeugkarossen, mit entsprechender Oberfläche Aₙ hat, befindet sich die Temperiervorrichtung im Volllastbetrieb, wenn sich n Gegenstände im Temperierraum befinden. Bei weniger Gegenständen, beispielsweise n-i (i= 1....n), kann der Temperierraum in einem Teillastbetrieb fahren. Bei n-i Gegenständen werden entsprechend weniger organische Verbindungen freigesetzt, so dass ein größerer Anteil der Temperierraumabluft als Umluft der Frischluft zugeführt werden kann. Es wird bei einer geeigneten Mischung der rückgeführten temperierten Temperierraumabluft mit der temperierten Frischluft beispielsweise bei einer Zuführung dieses Gemisches in die Schleusen der in der Schleuse herrschende Volumenstrom konstant gehalten.

Obwohl eine geringere Temperierleistung erfindungsgemäß mit einer geringeren Frischluftzufuhr zu dem Temperierraum verbunden ist, ist es nun nicht möglich, einen für die erforderliche Umwälzung der in dem Temperierraum befindlichen Luftmenge notwendigen Volumenstrom zu unterschreiten. Idealerweise wird dieser konstant gehalten werden. Beispielsweise könnte bei einer Unterschreitung eines bestimmten Volumenstroms in der Schleuse die Schleusenfunktion beeinträchtigt werden oder ganz ausfallen. Durch die Hinzunahme von erwärmter Temperierraumabluft hingegen werden die Volumenströme in den Schleusen oder im Temperierraum konstant gehalten und gleichzeitig kann eine wesentlich größere Variation der Temperierleistung, die mit einer Variation der Frischluftzufuhr an dem Frischluftwärmetauscher korreliert, vorgenommen werden. Dies ermöglicht einen besonders effizienten Betrieb der Vorrichtung.

Alternativ oder zusätzlich kann vorgesehen sein, dass die der Nachverbrennungseinrichtung zuführbare Temperierraumabluft der mittels des Frischluftwärmetauschers temperierten Frischluft zuführbar ist. Dies hat den neben dem bereits oben angesprochenen Vorteil, dass die Rückführung von Temperierraumabluft eine Effizienzsteigerung der Vorrichtung durch eine bessere Modulierbarkeit der Temperierleistung möglich ist, den zusätzlichen Vorteil, dass ein Großteil der ohnehin für den Betrieb der Nachverbrennungseinrichtung benötigten Leitungen und Geräte wie beispielsweise ein Ventilator mitgenützt werden können und somit der Installationsaufwand geringer ausfällt. Bei einer gleichzeitigen Nutzung beispielsweise eines für die Zufuhr von Nachverbrennungszuluft eingesetzten Gebläses für die Zuleitung eines Teils dieser Nachverbrennungszuluft zu der temperierten Frischluft hat den Vorteil, dass beispielsweise mittels einfacher Stellklappen die zuzuführende Luftmenge eingestellt oder geregelt werden kann.

Bei einer bevorzugten Ausführungsform der Erfindung kann vorgesehen sein, dass der Gesamtvolumenstrom über den Schleusenbereich zuführbar ist. Gleichzeitig kann der dem Temperierraum zugeführte Gesamtvolumenstrom zur Herstellung und Aufrechterhaltung der Schleusenfunktion dienen. Eine Unterstützung des Frischluftvolumenstroms durch den Umluftvolumenstrom zur Aufrechterhaltung des Gesamtvolumenstroms kann somit die Schleusenfunktionalität stabilisieren und absichern.

Es ist vorgesehen, dass die Steuereinrichtung dazu eingerichtet ist, den Gesamtvolumenstrom konstant zu halten. Mit einem konstanten Gesamtvolumenstrom bleibt die Schleusenwirkung konstant und damit wirksam. Besonders bevorzugt ist es, wenn ein in die Schleusen eingebrachter Volumenstrom konstant gehalten wird, wodurch eine Kondensation von Temperierraumluftbestandteilen oder ein Zusammenbruch der Schleusenwirkung verhindert wird. Die Schleusen dienen dazu, die inneren Bereiche des Temperierraumes, in dem die Gegenstände auf die Trocknungstemperatur erwärmt werden, vor dem Abstrom warmer Temperierraumluft zu schützen. Ein Abstrom von warmer Luft beispielsweise in eine angrenzende Kühlzone würde zu unerwünschter Kondensatbildung in der Kühlzone führen. Durch das erfindungsgemäß geregelte Zuführen der erwärmten Frischluft in den Schleusenbereich kann der Teilvolumenstrom in der Schleuse konstant gehalten werden.

Bei einer Weiterbildung der Erfindung kann vorgesehen sein, dass die Steuereinrichtung dazu eingerichtet ist, den den Temperierraum als Ganzes betreffenden Volumenstrom konstant zu halten. Der den Temperierraum betreffende Volumenstrom kann sich aus einem zugeführten und einem umgewälzten Volumenstrom zusammensetzen und ebenfalls konstant gehalten werden, beispielsweise unter Variation der Anteile an umgewälzter Temperrieraumluft und/oder zugeführter Frischluft.

Vorteilhafterweise umfasst die Vorrichtung eine Heizeinrichtung, in welcher die gesamte entnommene Abluft oder ein Teil der entnommenen Abluft zu einem Heizluftvolumenstrom erhitzbar und dem Umluftvolumenstrom zuführbar ist. Je nach Ausgestaltung der Vorrichtung kann es sich bei der Heizeinrichtung um ein oder mehrere herkömmliche Heizregister, eine thermische Nachverbrennung oder ähnliche Anlagen handeln.

Eine besonders bevorzugte Ausführungsform der Erfindung sieht vor, dass die Steuereinrichtung die Zufuhr von Frischluft in Abhängigkeit von der Beladung des Temperierraums steuert. Bei einer Anpassung der Temperierleistung der Vorrichtung zum Temperieren von Gegenständen an die Beladung des Temperierraums kann es notwendig sein, wie bereits erläutert, die Frischluftzufuhr in der Temperierraum zu reduzieren. Mit der Ergänzung des in den Temperierraum zugeführten Frischluftvolumenstroms durch den Umluftvolumenstrom besteht die Möglichkeit, gleichzeitig die Schleusenfunktion unabhängig von der Frischluftzufuhr stabil und funktionsfähig zu halten.

Bei einer Weiterbildung der Erfindung kann vorgesehen sein, dass die Leitung von dem Temperierraumabschnitt-Wärmetauscher mit der Frischluftableitung des Frischluftwärmetauschers verbunden ist. Somit erfolgt eine Zumischung der bereits durch den Temperierraumabschnitt-Wärmetauscher erwärmten Temperierraumabluft nach dem Wärmetauscher und kann einen möglicherweise reduzierten Volumenstrom bei einer geringeren Temperierleistungsanforderung ausgleichen, so dass es im Temperierraum keine Änderung des Volumenstroms gibt.

Bei einer weiteren Ausgestaltung der Erfindung kann vorgesehen sein, dass die Frischluftableitung von dem Frischluftwärmetauscher zu dem Temperierraum führt, in der Frischluftableitung ein Frischluftventilator angeordnet ist und die Leitung von dem Temperierraumabschnitt-Wärmetauscher zu dem Frischluftwärmetauscher stromabwärts des Frischluftwärmetauschers und stromaufwärts des Frischluftventilators mündet. Auch hier ergeben sich die bereits genannten Vorteile.

Eine konkrete Weiterbildung der Erfindung kann vorsehen, dass die Nachverbrennungseinrichtung eine Abluftzuleitung und eine Reinluftableitung aufweist, in der Abluftzuleitung zwischen dem Temperierraum und der Nachverbrennungseinrichtung ein Abluftventilator angeordnet ist und eine Leitung von der Nachverbrennungseinrichtung zu dem Frischluftwärmetauscher vorgesehen ist, wobei die von der Nachverbrennungseinrichtung zu dem Frischluftwärmetauscher führende Leitung von der Abluftzuleitung zu der Frischluftableitung führt. Dies ermöglicht eine besonders einfache und damit mit verringertem Aufwand ausführbare Ausgestaltung.

Bei einer Weiterbildung der Erfindung ist eine Steuereinrichtung vorgesehen, wobei der durch den Frischluftventilator oder/und den Abluftventilator erzeugte Volumenstrom mittels der Steuereinrichtung steuerbar oder regelbar ist. Dies stellt eine besonders vorteilhafte Möglichkeit zur Steuerung oder Regelung der durch den Temperierraum führenden Volumenströme dar. Die Steuerung oder Regelung kann beispielsweise durch die Ansteuerung der Drehzahl eines oder beider genannter Ventilatoren, durch Ansteuerung von an den Ventilatoren vorgesehenen Stell- oder Drosselklappen und/oder durch Ansteuerung von Luftleitklappen in zu- oder abführenden Leitungen erfolgen.

Bei einer besonders vorteilhaften Ausgestaltung der Erfindung kann eine Transportvorrichtung für die zu temperierenden Gegenstände vorgesehen sein, wobei die Steuereinrichtung dazu eingerichtet ist, den Temperierungsvorgang beeinflussende Parameter an eine Beladung des Temperierraums anzupassen. Dabei kann die Beladung des Temperierraums eine Anzahl an zu temperierenden Gegenständen, eine Größe der zu temperierenden Gegenstände oder/und eine Beschaffenheit der zu temperierenden Gegenstände umfassen und die den Temperierungsvorgang beeinflussenden Parameter können den durch den Frischluftventilator oder/und den durch den Abluftventilator erzeugten Volumenstrom oder/und eine Temperatur des Temperierraums umfassen. Somit ist es möglich, den Volumenstrom durch den Temperierraum auf einfache und kostengünstige Weise zu beeinflussen.

Für die Beeinflussung des Volumenstroms kann eine Drehzahl eines Ventilators, eine Stellung einer Drosselklappe, eine Stellung einer Luftleitklappe oder/und eine Stellung eines Bypassventils angesteuert werden.

Bei einer Weiterbildung der Erfindung kann vorgesehen sein, dass die Anpassung der den Temperierungsvorgang beeinflussenden Parameter schrittweise, insbesondere in Abhängigkeit von der Anzahl der zu temperierenden Gegenstände, der Fläche der zu trocknenden Beschichtung oder der Menge der zu trocknenden Beschichtung, stattfindet.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Darstellung einer erfindungsgemäßen ersten Ausführungsform einer Vorrichtung zur Temperierung von Gegenständen;
- Figur 2: eine schematische Darstellung einer erfindungsgemäßen zweiten Ausführungsform einer Vorrichtung zur Temperierung von Gegenständen; und
- Figur 3: eine schematische Darstellung einer erfindungsgemäßen Beschichtungsanlage.

### BESCHREIBUNG BEVORZUGTER AUSFÜHRUNGSBEISPIELE

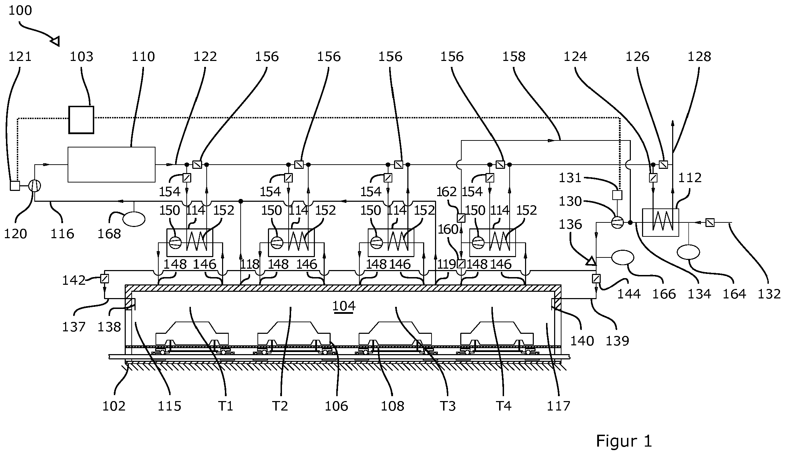

In Figur 1 ist eine Ausführungsform einer erfindungsgemäßen Vorrichtung zur Trocknung von Gegenständen in Form eines Trockners 100 veranschaulicht. Der Trockner 100 weist ein wärmeisoliertes Trocknergehäuse 102 auf, in dem ein Trocknerraum 104 untergebracht ist, durch den hier beispielhaft Kraftfahrzeugkarosserien 106 im Durchlauf hindurchgefördert werden. Hierzu umfasst der Trockner 100 ein an sich bekanntes Fördersystem 108 für die Fahrzeugkarosserien 106.

Dem Trocknerraum 104 wird erhitzte Luft zugeführt, um die Fahrzeugkarosserien 106 oder eine auf diese aufgebrachte Beschichtung oder Klebung zu trocknen. Wenn hier und im Folgenden von "Trocknen" die Rede ist, so sind damit alle Vorgänge gemeint, bei denen die Beschichtung der Fahrzeugkarosserie, insbesondere Lack, zum Aushärten gebracht werden kann. Dies kann beispielsweise durch Austreiben von Wasser oder Lösemitteln oder durch Vernetzung der Beschichtungssubstanz geschehen.

Der Trockner 100 umfasst eine thermische Nachverbrennungseinrichtung 110, einen Frischluft-Wärmetauscher 112 sowie mehrere baugleiche Trocknerraumabschnitt-Wärmetauscher 114, die den Trocknerraum 104 in mehrere Trocknerraumabschnitte T1-T4 einteilen. Die Anzahl an Trocknerraumabschnitten ist hier willkürlich gewählt und ist den individuellen Anforderungen anzupassen. Die Kraftfahrzeugkarosserien durchlaufen die Trocknerraumabschnitte T1-T4 nacheinander, am Eingang des Trocknerraums 104 ist eine Eingangsschleuse 115, am Ausgang eine Ausgangsschleuse 117 vorgesehen.

Bei der thermischen Nachverbrennungseinrichtung 110 kann es sich um eine regenerativthermische Anlage (RNV, auch RTO genannt) mit einen Gasbrenner handeln, dem Trocknerraumabluft aus dem Trocknerraum 104 über eine Abluftleitung 116 mit hier beispielhaft zwei Entnahmestellen 118, 119 mittels eines Abluftgebläses 120 zugeführt wird. Es können auch nur eine oder mehr als zwei Entnahmestellen vorhanden sein. In der Nachverbrennungseinrichtung 110 wird die Trocknerraumabluft aus dem Trocknerraum 104 mit Brenngas versetzt und dieses Abluft-Gasgemisch verbrannt. Durch die entstehenden hohen Temperaturen und durch den Verbrennungsvorgang werden die in der Abluft enthaltenen Schadstoffe unschädlich gemacht, beispielweise durch thermische Oxidation.

Das durch Erhitzen in der Nachverbrennungseinrichtung 110 erhaltene Reingas kann dem Frischluft-Wärmetauscher 112 vollständig oder teilweise über eine Nachverbrennungs-Ableitung 122 zugeführt werden, damit durch das erhitzte Reingas Frischluft erwärmt wird. Zur Steuerung der dem Frischluftwärmetauscher 112 zuführbaren Abluft sind hier beispielhaft zwei Abluftklappen 124, 126 vorgesehen. Je nach Stellung der Klappen 124, 126 kann die Abluft der thermischen Nachverbrennung vollständig über eine Abluftleitung 128. vollständig dem Frischluft-Wärmetauscher 112 oder anteilig der Abluftleitung 128 und dem Frischluft-Wärmetauscher 112 zugeleitet werden.

Die dem Trocknerraum 104 zuzuleitende Frischluft wird in der vorliegenden Ausführungsform über den Frischluft-Wärmetauscher 112 mittels eines Frischluftgebläses 130 angesaugt. Die sich noch auf Umgebungstemperatur befindliche Frischluft wird dem Frischluft-Wärmetauscher 112 über eine Frischluftzuleitung 132 zugeführt, dort je nach Stellung der Klappen 124, 126 mit einem bestimmten Volumenstrom aus Nachverbrennungsabluft mittels des Wärmetauschers 112 temperiert und gelangt über eine Frischluft-Wärmetauscher-Ableitung 134 zu dem Frischluftgebläse 130. Nach Passieren des Frischluftgebläses 130 gelangt die temperierte Frischluft über ein Zuluftsystem 136 in den Trocknerraum 104 über dessen Ein- und Auslaufbereiche als Schleusenluft. Dabei wird die Eingangsschleuse 115 über eine Leitung 137 und eine Auslassdüse 138, die Ausgangsschleuse 117 über eine Leitung 139 und eine Auslassdüse 140 versorgt. Entsprechende Klappen 142, 144 ermöglichen eine Steuerung des über die Auslassdüsen dem Trocknerraum 104 zugeführten Volumenstroms.

Abluft, die den Frischluft-Wärmetauscher 112 durchströmt hat, wird über die Abluftleitung 128 an die Umwelt abgegeben.

Die für die Trocknung notwendigen Temperaturen werden im Trocknerraum 104 durch die thermische Nachverbrennung 110 erzeugt, die als zentrale Brenneinheit die Trocknerraumabschnitte T1-T4 über die Trocknerraumabschnitt-Wärmetauscher 114 erhitzt. Alternativ könnten den Trocknerraumabschnitt-Wärmetauschern 114 auch einzelne Heizaggregate zugeordnet sein. Jeder Trocknerraumabschnitt-Wärmetauscher 114 ist einem von dem Trocknerraum 104 definierten Trocknerraumabschnitt T1-T4 zugeordnet, von denen der Trocknerraum 104 eine Mehrzahl aufweist. Jeder Trocknerraumabschnitt T1-T4 bildet so eine Heizzone. Beim vorliegenden Ausführungsbeispiel sind beispielhaft vier Trocknerraumabschnitte T1 bis T4 und vier zugehörige Trocknerraumabschnitt-Wärmetauscher 114 gezeigt. Die Trocknerraumabschnitte T1 bis T4 sind beim vorliegenden Ausführungsbeispiel baulich nicht voneinander getrennt.

Jedem der Trocknerraumabschnitt-Wärmetauscher 114 wird Trocknerraumabluft durch eine Auslassleitung 146 des zugehörigen Trocknerraumabschnitts zugeführt. In dem Trocknerraumabschnitt-Wärmetauscher 114 ist zusätzlich ein Fördergebläse 150 angeordnet.

Über eine Wärmeüberträgerleitung 152 wird die entnommene Trocknerraumabluft temperiert und durch eine Einlassleitung 148 wieder in den zugehörigen Trocknerraumabschnitt T des Trocknerraums 104 hinein geblasen. Der durch die Wärmeübertragerleitung 152 geleitete Volumenstrom kann beispielsweise über Klappen 154, 156 eingesteuert werden.

Im Teillastbetrieb des Trockners 100 sinkt der Wärmebedarf des Trockners 100. Ein Teillastbetrieb kann beispielsweise dadurch entstehen, dass nicht alle verfügbaren Plätze der Fördereinrichtung 108 mit Fahrzeugkarosserien 106 besetzt sind. Andere Ursachen für einen Teillastbetrieb können beispielsweise eine anderes Beschichtungsmaterial sein, das eine niedrigere Trocknungstemperatur oder einer geringere Wärmezufuhr erfordert, oder eine geringere Masse der zu beschichtenden Gegenstände und/oder eines Transportgestells wie beispielsweise ein Skid. Ein solcher Teillastbetrieb wird regelungstechnisch dadurch erreicht, dass beispielsweise weniger Trocknerraumabluft abgesaugt wird und der zentralen Nachverbrennungseinrichtung 110 entsprechend weniger Trocknerraumabluft zur Verfügung gestellt wird. Dies kann beispielsweise eine Verringerung der Leistung um bis zu 50% bedeuten und einen verringerten Abluft-Volumenstrom über die Abluftleitung 122 bewirken. Der damit einhergehende reduzierte Volumendurchsatz durch die Trocknerraumabschnitt-Wärmetauscher bewirkt (neben der verringerten Temperatur) eine verringerte Wärmezufuhr und somit eine verringerte Aufheizung des Trocknerraums 104. Gleichzeitig muss aber auch der durch den Frischluftwärmetauscher 112 geförderte Frischluftvolumenstrom dem verringerten Nachverbrennungsabluft-Volumenstrom angepasst, sprich verringert, werden. Dies hätte einen verringerten Volumendurchsatz an den Schleusen 115, 117 zur Folge, was die Schleusenfunktion negativ beeinflussen könnte. Um diesem entgegenzuwirken, ist in dem in der Figur 1 gezeigten Ausführungsbeispiel eine Trocknerraumabschnitt-Abluftrückführleitung 158 vorgesehen. Die Leitung 158 zweigt an dem Auslass eines Trocknerraumabschnitt-Wärmetauschers 114 ab und führt dem jeweiligen Trocknerraumabschnitt entnommene Trocknerraumabluft der Frischluftwärmetauscher-Ableitung 134 als Komplementärluft zu. Zur Steuerung des mittels der Leitung 158 entnommenen Volumenstroms sind Klappen 160, 162 vorgesehen, über die das Verhältnis zwischen entnommenem Volumenstrom zu wieder dem Trocknerraum 104 direkt zugeführtem Volumenstrom einstellbar ist. Auf diese Weise kann ein erheblicher Teil der ansonsten notwendigerweise zuzuführenden und zu erwärmenden Frischluft eingespart werden. Gleichzeitig kann in jeder Leistungsstufe des Trockners 100 ein konstantes Schleusenluftvolumen realisiert werden. Die Luftdichtheit des Trockners 100 kann somit ohne ein ansonsten notwendiges zusätzliches Gebläse erzielt werden, das bei einer niedrigen Leistungsstufe die korrekte Funktion der Schleusen 115, 117 aufrechterhalten müsste.

In diesem Zusammenhang ist es insbesondere von Vorteil, wenn sich der durch das Frischluftgebläse 130 förderbare Volumenstrom steuern lässt. Dies kann beispielsweise durch eine einstellbare Drehzahl des Gebläses realisiert werden. Es sind aber auch andere volumenstromsteuernde Maßnahme wie Steuerklappen oder ähnliches denkbar. Bei einer direkten Ansteuerung der Drehzahl des Gebläses ist es von besonderem Vorteil, dass in der Regel eine Reduzierung der Drehzahl mit einer Verringerung der Leistungsaufnahme und damit mit einer Energieeinsparung einhergeht. Die Ansteuerbarkeit des Frischluftgebläses 130 ist in der Figur 1 durch eine Steuer-/Regeleinheit 131 symbolisiert, die manuell, motorisch lokal oder auch motorisch bzw. automatisiert zentral ansteuerbar sein kann. Die zentrale Ansteuerbarkeit ist durch eine Steuereinrichtung 103 veranschaulicht. Die Steuereinrichtung 103 ist mit der Steuer-/Regeleinheit 131 verbunden und kann zentrale Steuerungsaufgaben übernehmen.

In vergleichbarer Weise kann es besonders vorteilhaft sein, wenn das Abluftgebläse 120 in ähnlicher Weise hinsichtlich seiner Volumenförderung steuerbar ist. Dies ist in Figur 1 durch die Steuer-/Regeleinheit 121 symbolisiert, die ebenfalls mit der Steuereinrichtung 103 verbunden ist. Die Steuereinrichtung kann mit weiteren Elementen des Trockners, wie beispielsweise den Steuerklappen 124, 126, 144, 154, 156, 160, 162 verbunden sein.

Mit der Steuerbarkeit des Frischluftgebläses 130 und des Abluftgebläses 120 kann eine Anpassung der dem Trocknerraum 104 zugeführten Frischluft an die momentan förderbare Nachverbrennungsabluft durchgeführt werden. Gleichzeitig kann ein Unterschreiten des Frischluftvolumenstroms durch eine entsprechende Erhöhung der über die Leitung 158 umgewälzten Trocknerraumabluft verhindert werden.

Vorteilhafterweise kann eine Regelung der einzelnen Volumenströme mit Hilfe von Volumenstromreglern erfolgen. Hierzu können beispielsweise stromaufwärts des Frischluftwärmetauschers 112 in der Frischluftzuleitung 132 ein erster Volumenstromregler 164, stromabwärts des Frischluftgebläses 130 ein zweiter Volumenstromregler 166 und stromaufwärts des Abluftgebläses 120 in der Abluftleitung 116 ein dritter Volumenstromregler 168 angebracht sein.

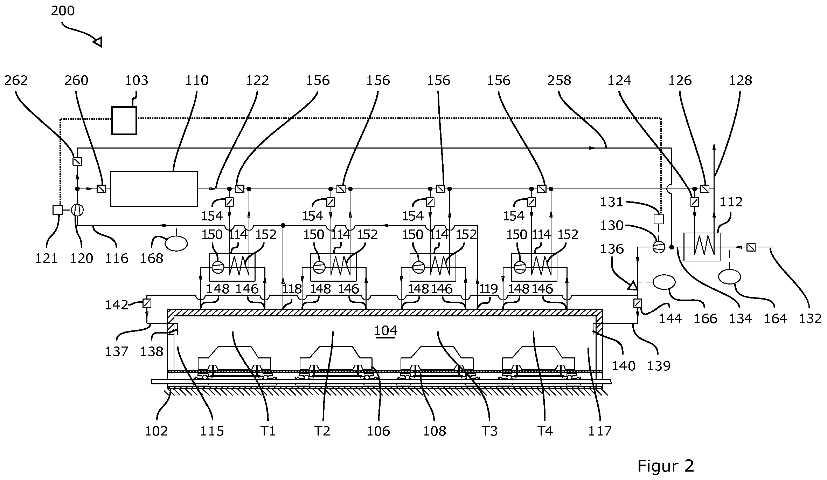

Figur 2 zeigt eine alternative Ausführungsform zu dem in Figur 21 gezeigten Trockner 100 in Form eines Trockners 200. Gleiche oder vergleichbare Merkmale sind mit den gleichen Bezugszeichen bezeichnet. Im Unterschied zu dem in Figur 1 gezeigten Trockner 100 ist bei der in Figur 2 dargestellten Ausführungsform die Zuführung von Trocknerraumabluft nicht über die Abluft eines der Trocknerraumabschnitt-Wärmetauscher 114, sondern über eine Abzweigleitung 258 in der Abluftleitung 116, also der Zuführung der Abluft zu der Nachverbrennungseinrichtung 110, gelöst. Die Abzweigleitung 258 zweigt stromaufwärts der Nachverbrennungseinrichtung 110 ab und mündet, wie auch die Leitung 158 bei dem Trockner 100, stromabwärts des Frischluftwärmetauschers 112 und stromaufwärts des Frischluftgebläses 130 in die Frischluftwärmetauscher-Ableitung 134. Über die Leitung 258 kann der bereits vortemperierten Frischluft ein bestimmter Anteil an dem Trocknerraum 104 entnommener Trocknerabluft als Komplementärluft zugemischt werden.

Der Anteil an zuzumischender Abluft kann über Klappen 260, 262 eingestellt werden.

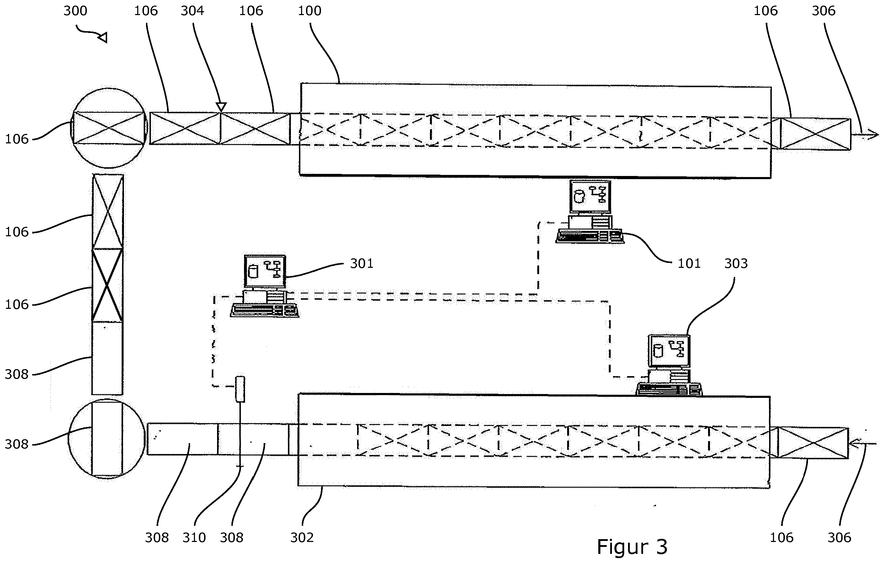

Figur 3 veranschaulicht in einer schematischen Ansicht eine Beschichtungsanlage 300 mit beispielsweise einem Trockner 100 und einer Beschichtungseinrichtung 302 wie beispielsweise eine Lackierkabine. Der Trockner wird durch eine Trocknersteuerung 101, die Beschichtungseinrichtung durch eine Beschichtungssteuerung 303 gesteuert. Die Beschichtungsanlage 300 wird insgesamt durch eine Anlagensteuerung 301 gesteuert, die ihrerseits mit der Trocknersteuerung 101 und der Beschichtungseinrichtungssteuerung 303 verbunden ist.

Eine Fördereinrichtung 304 verbindet den Trockner 100 mit der Beschichtungseinrichtung 302. Mittels der Fördereinrichtung 304 können Fahrzeugkarosserien 106 nach einem Beschichtungsvorgang in der Beschichtungseinrichtung 302 zu dem Trockner 100 in an sich bekannter Weise gefördert werden. Pfeile 306 zeigen die Förderrichtung an. Die Fördereinrichtung 302 ist in der hier dargestellten Situation nicht vollständig belegt. Kreuzförmig gekennzeichnete Plätze sind mit Fahrzeugkarosserien 106 belegt, freie Plätze 308 sind als Leerstellen gekennzeichnet. Diese Leerstellen 308 bilden freie Arbeits- bzw. Produktionstakte.

In der Figur 3 ist eine möglicherweise auftretende und für den Trockner 100 zu erwartende Teillastsituation dargestellt. Während in dem in Figur 3 gezeigten Betriebszustand der Trockner 100 im Moment noch unter Volllast bezüglich der Belegung der Förderereinrichtungsplätze arbeitet, ist mit den freien Plätzen 308 zwischen der Beschichtungseinrichtung 302 und dem Trockner 100 bereits eine Teillastphase erkennbar und kann vorbereitet werden, während der von dem möglichen Trocknungsplätzen des Trockners 100 nicht alle belegt sein werden.

Diese Situation kann in der Anlagensteuerung 301 beispielsweise durch eine Rückkopplung von in der Beschichtungseinrichtung 302 stattfindenden Prozessen abgebildet werden. Alternativ kann zur Feststellung der in Figur 3 gezeigten Situation eine Detektionseinrichtung 310 vorgesehen sein. Die Detektionseinrichtung 310 ist mit der zentralen Anlagensteuerung 301 direkt oder mittelbar über die Beschichtungseinrichtung 302 so verbunden, dass für die Anlagensteuerung 301 zu erwartende Freitakte des Trockners 100 ermittelbar sind. Die Detektionseinrichtung kann mechanisch, optisch, akustisch oder über elektromagnetische Wellen wie beispielsweise bei einem RFID-Scanner arbeiten. Die beispielsweise mittels einer RFID-Kommunikation erhaltenen Daten über den zu temperierenden Gegenstand können beispielsweise Informationen über die Art und Menge der Beschichtung, deren Trocknungsverhalten wie beispielsweise die dabei entstehenden organischen Verbindungen (VOC) sowie die für dem Temperiervorgang benötigten Parameter wie beispielsweise eine Oberflächentemperatur oder eine Behandlungsdauer beinhalten.

Idealerweise erfolgt die Ermittlung eines freien Arbeitstaktes so kurz vor dem Trockner 100, dass die Förderzeit der Reaktionszeit zum Angleichen an die sich verändernden Prozessverhältnisse im Trockner 100 entspricht.

Erfolgt die Ermittlung von Freitakten in räumlich größeren Abstand zu dem Trockner 100, kann ein entsprechendes Regelsignal mit einer geeigneten zeitlichen Verzögerung an die Trocknersteuerung 101 übergeben werden. Auf diese Weise kann verhindert werden, dass sich in dem Trockner 100 bereits veränderte Prozessverhältnisse einstellen, obwohl sich die Beladung des Trockners 100 noch nicht verändert hat.

Bei einer beispielhaften Ausführungsform der Beschichtungsanlage der Figur 3 kann vorgesehen sein, dass eine Anpassung der Prozessverhältnisse in dem Trockner 100 schrittweise erfolgt. Eine Prozessschrittveränderung kann dabei beispielweise eine Anpassung der relevanten Parameter für ein Werkstück, beispielsweise eine Fahrzeugkarosserie, darstellen. Eine solche Prozessschrittveränderung kann nach oben - also ein Werkstück zusätzlich - oder nach unten - also ein Werkstück weniger - erfolgen.

Es kann hierbei lediglich eine relative Anpassungssteuerung erfolgen, bei der bei Detektion eines Freitaktes an der Detektionseinrichtung 310 eine Prozessschrittveränderung nach unten bezogen auf den momentanen Beladungszustand und dem damit einhergehenden Level der relevanten Prozessparameter. Beispielsweise kann die Drehzahl eines beteiligten Ventilators wie beispielsweise des Abluftgebläses 120 reduziert oder/und die Stellung einer Luftleitklappe wie beispielsweise der Klappen 160 bzw. 162 um einen Schritt geschlossen bzw. geöffnet werden. Bei einem weiteren detektierten oder der Anlagensteuerung 301 bekannten Freitakt erfolgt eine weitere Prozessschrittveränderung nach unten von dem dann herrschenden Niveau. Wird hingegen kein Freitakt detektiert, da auf der Fördereinrichtung 304 ein Werkstück an der Detektionseinrichtung detektiert wird oder der Anlagensteuerung 301 anderweitig bekannt ist, erfolgt eine Anpassung der Prozessparameter um einen Schritt nach oben, wieder ausgehend von dem aktuellen Niveau.

Alternativ oder zusätzlich kann auch eine absolute Anpassungssteuerung realisiert werden. Hierbei wird über ein bestimmtes Zeitintervall hinweg die Anzahl der in diesem Zeitintervall vorliegenden Freitakte ermittelt. Die Anzahl der Freitakte kann sich aus zusammenhängenden Leerstellen auf der Fördereinrichtung oder der Anlagensteuerung anderweitig bekannten Freitakten handeln, es kann sich aber auch um eine "gemittelte" Freitaktanzahl über ein bestimmtes Zeitintervall handeln. In einem solchen Fall kann eine Anpassung der Prozessparameter über mehrere Schritte oder Stufen gleichzeitig hinweg vorgenommen werden. Beispielsweise kann bei einer ermittelten Anzahl von vier Freitakten eine Anpassung um vier Schritte oder Stufen erfolgen. Eine solche Anpassung kann auch bei einem nicht-linearen Verhalten des Trockners hinsichtlich der Anpassung einzelner Prozessparameter vonnöten sein.

Beide Varianten der Prozessparameteranpassung - relativ und absolut - kann nur innerhalb bestimmter Systemgrenzen erfolgen. Beispielsweise stellt der minimal notwendige Luftdurchsatz am Trockner, eine Mindesttemperatur oder bestimmte Mischungsverhältnisse eine Untergrenze für mögliche Anpassungsbereiche dar. Beispielsweise kann eine solche Untergrenze bei einem Beladungsverhältnis von 50% des Trockners 100 liegen.

## Patentansprüche

1. Vorrichtung (100, 200) zur Temperierung von Gegenständen (106), insbesondere zum Trocknen von beschichteten Fahrzeugkarosserien (106), mit
einem Temperierraum (104) mit mindestens einem Schleusenbereich (115, 117),
einer Frischlufteinrichtung (112) zur Erzeugung einer dem Temperierraum (104) zuführbaren Frischluft,
einer Umlufteinrichtung (114, 110), die dem Temperierraum (104) Temperierraumabluft entnimmt und eine dem Temperierraum zuführbare Umluft erzeugt,
einer Zulufteinrichtung (136) zur Zuführung von Luft zu dem Temperierraum (104) sowie einer Steuereinrichtung (103),
wobei der Zulufteinrichtung (136) ein Frischluftvolumenstrom und ein Umluftvolumenstrom zuführbar sind,
wobei
die Umlufteinrichtung eine Nachverbrennungseinrichtung (110) aufweist, wobei der Nachverbrennungseinrichtung (110) Temperierraumabluft zur thermischen Nachbehandlung zuführbar ist und
die Frischlufteinrichtung einen Frischluftwärmetauscher (112) mit einer Frischluftzuleitung (132) und einer Frischluftableitung (134) umfasst, wobei die Frischluftableitung mit der Zulufteinrichtung verbunden ist,
wobei
der Temperierraum (104) wenigstens einen Temperierraumabschnitt (T1-T4) definiert,
wobei
die Umlufteinrichtung ferner mindestens einen Temperierraumabschnitt-Wärmetauscher (114) aufweist, dem ein Temperierraumabschnitt (T1-T4) des Temperierraums (104) zugeordnet ist,
wobei Temperierraumabschnitt (T1-T4) und Temperierraumabschnitt-Wärmetauscher (114) so verbunden sind, dass dem Temperierraumabschnitt (T1-T4) Temperierraumluft entnehmbar, zur Temperierung durch den Temperierraumabschnitt-Wärmetauscher (114) leitbar und dem Temperierraumabschnitt (T1-T4) zuführbar ist und so die Temperierraumluft dem Temperierraumabschnitt (T1-T4) als Umwälzluftstrom wieder in einem Kreislauf zuführbar ist,
und die Steuereinrichtung (103) dazu eingerichtet ist, den Frischluftvolumenstrom und den Umluftvolumenstrom so zu steuern, dass der dem Temperierraum (104) zugeführte, den Frischluftvolumenstrom und den Umluftvolumenstrom umfassende Gesamtvolumenstrom eine Untergrenze nicht unterschreitet und ein in den mindestens einen Schleusenbereich (115, 117) eingebrachter Volumenstrom konstant gehalten wird,
wobei
die mittels des Temperierraumabschnitt-Wärmetauschers (114) temperierte Temperierraumluft über eine Leitung (158) von dem Temperierraumabschnitt-Wärmetauscher (114) der Zulufteinrichtung zuführbar ist oder/und
die der Nachverbrennungseinrichtung (110) zuführbare Temperierraumabluft der Zulufteinrichtung zuführbar ist.

2. Vorrichtung nach Anspruch 1, wobei der Gesamtvolumenstrom über den Schleusenbereich (115, 117) zuführbar ist.

3. Vorrichtung nach einem der Ansprüche 1 oder 2, wobei die Steuereinrichtung (103) dazu eingerichtet ist, den Gesamtvolumenstrom konstant zu halten.

4. Vorrichtung nach einem der vorhergehenden Ansprüche, wobei die Vorrichtung eine Heizeinrichtung (110, 152) umfasst, in welcher die gesamte entnommene Abluft oder ein Teil der entnommenen Abluft zu einem Heizluftvolumenstrom erhitzbar und dem Umluftvolumenstrom zuführbar ist.

5. Vorrichtung nach einem der vorhergehenden Ansprüche, wobei die Steuereinrichtung (103) die Zufuhr von Frischluft in Abhängigkeit von der Beladung des Temperierraums (104) steuert.

6. Vorrichtung nach einem der vorhergehenden Ansprüche, wobei die Leitung (158) von dem Temperierraumabschnitt-Wärmetauscher (114) mit der Frischluftableitung (134) des Frischluftwärmetauschers (112) verbunden ist.

7. Vorrichtung nach einem der vorhergehenden Ansprüche, wobei die Frischluftableitung (134) von dem Frischluftwärmetauscher (112) zu dem Temperierraum (104) führt, die Zulufteinrichtung einen Frischluftventilator (130) umfasst und die Leitung (158) von dem Temperierraumabschnitt-Wärmetauscher (114) zu dem Frischluftwärmetauscher (112) stromabwärts des Frischluftwärmetauschers (112) und stromaufwärts des Frischluftventilators (130) mündet.

8. Vorrichtung nach einem der vorhergehenden Ansprüche, wobei die Nachverbrennungseinrichtung (110) eine Abluftzuleitung (116) und eine Reinluftableitung (122) aufweist, in der Abluftzuleitung (116) zwischen dem Temperierraum (104) und der Nachverbrennungseinrichtung (110) ein Abluftventilator (120) angeordnet ist und eine Leitung (258) von der Nachverbrennungseinrichtung (110) zu dem Frischluftwärmetauscher (112) vorgesehen ist, wobei die von der Nachverbrennungseinrichtung (110) zu dem Frischluftwärmetauscher (112) führende Leitung (258) von der Abluftzuleitung (116) zu der Frischluftableitung (134) führt.

9. Vorrichtung nach einem der vorhergehenden Ansprüche, mit einer Transportvorrichtung (302) für die zu temperierenden Gegenstände (106) zur Beladung des Temperierraums (104), wobei eine Steuereinrichtung (301, 101) dazu eingerichtet ist, den Temperierungsvorgang beeinflussende Parameter an eine Beladung des Temperierraums (104) anzupassen, wobei die Beladung des Temperierraums (104) eine Anzahl an zu temperierenden Gegenständen (106) umfasst.

10. Vorrichtung nach Anspruch 9, wobei die Beeinflussung des Volumenstroms eine Drehzahl eines Ventilators (130, 120), eine Stellung einer Drosselklappe (160 162, 260, 262) eine Stellung einer Luftleitklappe oder/und eine Stellung eines Bypassventils umfasst.

11. Vorrichtung nach einem der vorhergehenden Ansprüche, wobei die Anpassung der den Temperierungsvorgang beeinflussenden Parameter schrittweise, insbesondere in Abhängigkeit von der Anzahl der zu temperierenden Gegenstände (106), der Fläche der zu trocknenden Beschichtung oder der Menge der zu trocknenden Beschichtung, stattfindet.

12. Beschichtungsanlage (300) für die Beschichtung von Gegenständen (106), mit einer Vorrichtung zur Temperierung von Gegenständen nach einem der vorhergehenden Ansprüche.

13. Verfahren zur Steuerung einer Vorrichtung zur Temperierung von Gegenständen nach einem der Ansprüche 1 bis 11, insbesondere zum Trocknen von beschichteten Fahrzeugkarosserien, wobei das Verfahren folgende Schritte umfasst:
Erfassen einer bestehenden oder zukünftigen Beladung des Temperierraums;
Einstellen eines Verhältnisses zwischen dem Frischluftvolumenstrom und dem Umluftvolumenstrom in Abhängigkeit von der Beladung derart, dass der insgesamt dem Temperierraum zugeführte, den Frischluftvolumenstrom und den Umluftvolumenstrom umfassenden Gesamtvolumenstrom eine Untergrenze nicht unterschreitet und ein in den mindestens einen Schleusenbereich eingebrachter Volumenstrom konstant gehalten wird.

14. Verfahren nach Anspruch 13, wobei das Einstellen des Verhältnisses zwischen dem Umluftvolumenstrom und dem Frischluftvolumenstrom ein Konstanthalten des dem Temperierraum, insbesondere dem mindesten einen Schleusenbereich, zugeführten Gesamtvolumenstroms umfasst.

15. Verfahren nach einem der Ansprüche 13 oder 14, wobei die Vorrichtung eine Heizeinrichtung umfasst, in welcher der ganze oder ein Teil der entnommenen Trocknerabluft zu einem Heizluftvolumenstrom erhitzbar ist und wobei der Umluftvolumenstrom den Heizluftvolumenstrom umfasst.

## Claims

1. An apparatus (100, 200) for the temperature control of objects (106), in particular for drying coated vehicle bodies (106), having
a temperature control space (104) with at least one air lock region (115, 117),
a fresh air device (112) for producing fresh air which can be fed to the temperature control space (104),
a recirculating air device (114, 110) which removes temperature control space waste air from the temperature control space (104) and produces recirculating air which can be fed to the temperature control space,
a feed air device (136) for feeding air to the temperature control space (104), and
a control device (103),
wherein it is possible for a fresh air volumetric flow and a recirculating air volumetric flow to be fed to the feed air device (136),
with
the recirculating air device having an afterburning device (110), it being possible for temperature control space waste air to be fed to the afterburning device (110) for thermal aftertreatment, and
the fresh air device comprising a fresh air heat exchanger (112) with a fresh air feed line (132) and a fresh air discharge line (134), the fresh air discharge line being connected to the feed air device,
with
the temperature control space (104) defining at least one temperature control space section (T1-T4),
with
the recirculating air device having, furthermore, at least one temperature control space section heat exchanger (114) which is assigned a temperature control space section (T1-T4) of the temperature control space (104),
the temperature control space section (T1-T4) and the temperature control space section heat exchanger (114) being connected in such a way that temperature control space air can be removed from the temperature control space section (T1-T4), can be guided through the temperature control space section heat exchanger (114) for temperature control purposes, and can be fed to the temperature control space section (T1-T4), and the temperature control space air can thus be fed to the temperature control space section (T1-T4) in a circuit again as a circulating air flow,
and the control device (103) being set up to control the fresh air volumetric flow and the recirculating air volumetric flow in such a way that the overall volumetric flow which is fed to the temperature control space (104) and comprises the fresh air volumetric flow and the recirculating air volumetric flow does not undershoot a lower limit, and that a volumetric flow which is introduced into the at least one air lock region (115, 117) is kept constant,
with
it being possible for the temperature control space air which is temperature controlled by means of the temperature control space section heat exchanger (114) to be fed via a line (158) from the temperature control space section heat exchanger (114) to the feed air device, and/or
it being possible for the temperature control space waste air which can be fed to the afterburning device (110) to be fed to the feed air device.

2. The apparatus as claimed in claim 1, it being possible for the overall volumetric flow to be fed in via the air lock region (115, 117).

3. The apparatus as claimed in either of claims 1 and 2, the control device (103) being set up to keep the overall volumetric flow constant.

4. The apparatus as claimed in one of the preceding claims, the apparatus comprising a heating device (110, 152), in which all of the removed waste air or a part of the removed waste air can be heated to form a heated air volumetric flow and can be fed into the recirculating air volumetric flow.

5. The apparatus as claimed in one of the preceding claims, the control device (103) controlling the feed of fresh air in a manner which is dependent on the loading of the temperature control space (104).

6. The apparatus as claimed in one of the preceding claims, the line (158) from the temperature control space section heat exchanger (114) being connected to the fresh air discharge line (134) of the fresh air heat exchanger (112).

7. The apparatus as claimed in one of the preceding claims, the fresh air discharge line (134) leading from the fresh air heat exchanger (112) to the temperature control space (104), the feed air device comprising a fresh air fan (130), and the line (158) from the temperature control space section heat exchanger (114) to the fresh air heat exchanger (112) opening out downstream of the fresh air heat exchanger (112) and upstream of the fresh air fan (130).

8. The apparatus as claimed in one of the preceding claims, the afterburning device (110) having a waste air feed line (116) and a pure air discharge line (122), a waste air fan (120) being arranged in the waste air feed line (116) between the temperature control space (104) and the afterburning device (110), and a line (258) being provided from the afterburning device (110) to the fresh air heat exchanger (112), the line (258) which leads from the afterburning device (110) to the fresh air heat exchanger (112) leading from the waste air feed line (116) to the fresh air discharge line (134).

9. The apparatus as claimed in one of the preceding claims, having a transport apparatus (302) for the objects (106) to be temperature controlled for loading the temperature control space (104), a control device (301, 101) being set up to adapt parameters which influence the temperature control operation to a loading of the temperature control space (104), the loading of the temperature control space (104) comprising a number of objects (106) to be temperature controlled.

10. The apparatus as claimed in claim 9, the influencing of the volumetric flow comprising a rotational speed of a fan (130, 120), a position of a throttle valve (160, 162, 260, 262), a position of an air guiding valve and/or a position of a bypass valve.

11. The apparatus as claimed in one of the preceding claims, the adaptation of the parameters which influence the temperature control operation taking place in a stepped manner, in particular in a manner which is dependent on the number of objects (106) to be temperature controlled, the surface area of the coating to be dried, or the quantity of the coating to be dried.

12. A coating plant (300) for coating objects (106), having an apparatus for the temperature control of objects as claimed in one of the preceding claims.

13. A method for controlling an apparatus for the temperature control of objects as claimed in one of claims 1 to 11, in particular for drying coated vehicle bodies,
the method comprising the following steps:
detection of an existing or future loading of the temperature control space;
setting of a ratio between the fresh air volumetric flow and the recirculating air volumetric flow in a manner which is dependent on the loading in such a way that the overall volumetric flow which is fed overall to the temperature control space and comprises the fresh air volumetric flow and the recirculating air volumetric flow does not undershoot a lower limit and that a volumetric flow which is introduced into the at least one air lock region is kept constant,

14. The method as claimed in claim 13, the setting of the ratio between the recirculating air volumetric flow and the fresh air volumetric flow comprising keeping the overall volumetric flow which is fed to the temperature control space, in particular to the at least one air lock region, constant.

15. The method as claimed in either of claims 13 and 14, the apparatus comprising a heating device, in which all of the removed dryer waste air or a part of the removed dryer waste air can be heated to form a heated air volumetric flow, and the recirculating air volumetric flow comprising the heated air volumetric flow.

## Revendications

1. Dispositif (100, 200) pour l'équilibrage de température d'objets (106), notamment pour le séchage de carrosseries de véhicule enduites (106), avec un espace d'équilibrage de température (104) avec au moins une région de sas (115, 117),
une installation d'air frais (112) pour la génération d'un air frais pouvant être acheminé à l'espace d'équilibrage de température (104),
une installation d'air de recirculation (114, 110) qui prélève de l'air d'évacuation d'espace d'équilibrage de température de l'espace d'équilibrage de température (104) et génère de l'air de recirculation pouvant être acheminé à l'espace d'équilibrage de température,
une installation d'air d'alimentation (136) pour l'acheminement d'air vers l'espace d'équilibrage de température (104) ainsi qu'une installation de commande (103),
dans lequel un courant volumique d'air frais et un courant volumique d'air de recirculation peuvent être acheminés à l'installation d'air d'alimentation (136), dans lequel l'installation d'air de recirculation présente une installation de postcombustion (110), dans lequel de l'air d'évacuation d'espace d'équilibrage de température peut être acheminé à l'installation de postcombustion (110) pour le post-traitement thermique et
l'installation d'air frais comprend un échangeur de chaleur à air frais (112) avec une conduite d'amenée d'air frais (132) et une évacuation d'air frais (134), dans lequel l'évacuation d'air frais est connectée à l'installation d'air d'alimentation, dans lequel l'espace d'équilibrage de température (104) définit au moins une section d'espace d'équilibrage de température (T1 à T4),
dans lequel l'installation d'air de recirculation présente en outre au moins un échangeur de chaleur à section d'espace d'équilibrage de température (114) auquel une section d'espace d'équilibrage de température (T1 à T4) de l'espace d'équilibrage de température (104) est associée,
dans lequel la section d'espace d'équilibrage de température (T1 à T4) et l'échangeur de chaleur à section d'espace d'équilibrage de température (114) sont connectés de sorte que de l'air de recirculation d'espace d'équilibrage de température peut être prélevé de la section d'espace d'équilibrage de température (T1 à T4), peut être dirigé à travers l'échangeur de chaleur à section d'espace d'équilibrage de température (114) pour l'équilibrage de température et peut être acheminé à la section d'espace d'équilibrage de température (T1 à T4), et l'air de recirculation d'espace d'équilibrage de température peut ainsi être réacheminé dans un circuit à la section d'espace d'équilibrage de température (T1 à T4) en tant que courant d'air de circulation,
et l'installation de commande (103) est configurée pour commander le courant volumique d'air frais et le courant volumique d'air de recirculation de sorte que le courant volumique total acheminé à l'espace d'équilibrage de température (104), comprenant le courant volumique d'air frais et le courant volumique d'air de recirculation, ne dépasse pas par le bas une limite inférieure, et un courant volumique introduit dans l'au moins une région de sas (115, 117) est maintenu constant,
dans lequel
l'air de recirculation d'espace d'équilibrage de température équilibré en température au moyen de l'échangeur de chaleur à section d'espace d'équilibrage de température (114) peut être acheminé par le biais d'une conduite (158) de l'échangeur de chaleur à section d'espace d'équilibrage de température (114) à l'installation d'air d'alimentation ou/et
l'air d'évacuation d'espace d'équilibrage de température pouvant être acheminé à l'installation de postcombustion (110) peut être acheminé à l'installation d'air d'alimentation.

2. Dispositif selon la revendication 1, dans lequel le courant volumique total peut être acheminé par le biais de la région de sas (115, 117).

3. Dispositif selon une des revendications 1 ou 2, dans lequel l'installation de commande (103) est configurée pour maintenir le courant volumique total constant.

4. Dispositif selon une des revendications précédentes, dans lequel le dispositif comprend une installation de chauffage (110, 152) dans laquelle l'air d'évacuation prélevé total ou une partie de l'air d'évacuation prélevé peut être chauffé(e) en un courant volumique d'air chaud et peut être acheminé(e) au courant volumique d'air de recirculation.

5. Dispositif selon une des revendications précédentes, dans lequel l'installation de commande (103) commande l'acheminement d'air frais en fonction de la charge de l'espace d'équilibrage de température (104).

6. Dispositif selon une des revendications précédentes, dans lequel la conduite (158) est connectée de l'échangeur de chaleur à section d'espace d'équilibrage de température (114) à l'évacuation d'air frais (134) de l'échangeur de chaleur à air frais (112).

7. Dispositif selon une des revendications précédentes, dans lequel l'évacuation d'air frais (134) conduit de l'échangeur de chaleur à air frais (112) à l'espace d'équilibrage de température (104), l'installation d'air d'alimentation comprend un ventilateur d'air frais (130) et la conduite (158) débouche de l'échangeur de chaleur à section d'espace d'équilibrage de température (114) à l'échangeur de chaleur à air frais (112) en aval de l'échangeur de chaleur à air frais (112) et en amont du ventilateur d'air frais (130).

8. Dispositif selon une des revendications précédentes, dans lequel l'installation de postcombustion (110) présente une conduite d'amenée d'air d'évacuation (116) et une évacuation d'air pur (122), un ventilateur d'air d'évacuation (120) est disposé dans la conduite d'amenée d'air d'évacuation (116) entre l'espace d'équilibrage de température (104) et l'installation de postcombustion (110), et une conduite (258) est prévue de l'installation de postcombustion (110) à l'échangeur de chaleur à air frais (112), dans lequel la conduite (258) conduisant de l'installation de postcombustion (110) à l'échangeur de chaleur à air frais (112) conduit de la conduite d'amenée d'air d'évacuation (116) à la conduite d'évacuation d'air frais (134).

9. Dispositif selon une des revendications précédentes, avec un dispositif de transport (302) pour les objets (106) à équilibrer en température en vue de la charge de l'espace d'équilibrage de température (104), dans lequel une installation de commande (301, 101) est configurée pour adapter des paramètres influençant le processus d'équilibrage de température à une charge de l'espace d'équilibrage de température (104), dans lequel la charge de l'espace d'équilibrage de température (104) comprend un certain nombre d'objets à équilibrer en température (106).

10. Dispositif selon la revendication 9, dans lequel l'influence du courant volumique comprend une vitesse de rotation d'un ventilateur (130, 120), une position d'un clapet d'étranglement (160, 162, 260, 262), une position d'un clapet de conduite d'air ou/et une position d'une soupape de dérivation.

11. Dispositif selon une des revendications précédentes, dans lequel l'adaptation des paramètres influençant le processus d'équilibrage de température a lieu progressivement, notamment en fonction du nombre des objets à équilibrer en température (106), de la surface du revêtement à sécher ou de la quantité du revêtement à sécher.

12. Installation d'enduction (300) pour l'enduction d'objets (106), avec un dispositif pour l'équilibrage de température d'objets selon une des revendications précédentes.

13. Procédé de commande d'un dispositif pour l'équilibrage de température d'objets selon une des revendications 1 à 11, notamment pour le séchage de carrosseries de véhicule enduites,
dans lequel le procédé comprend les étapes suivantes :
détection d'une charge existante ou ultérieure de l'espace d'équilibrage de température ;
réglage d'un rapport entre le courant volumique d'air frais et le courant volumique d'air de recirculation en fonction de la charge de telle sorte que le courant volumique total acheminé au total à l'espace d'équilibrage de température, comprenant le courant volumique d'air frais et le courant volumique d'air de recirculation, ne dépasse pas par le bas une limite inférieure, et un courant volumique introduit dans l'au moins une région de sas est maintenu constant.

14. Procédé selon la revendication 13, dans lequel le réglage du rapport entre le courant volumique d'air de recirculation et le courant volumique d'air frais comprend un maintien constant du courant volumique total acheminé à l'espace d'équilibrage de température, notamment à l'au moins une région de sas.

15. Procédé selon une des revendications 13 ou 14, dans lequel le dispositif comprend une installation de chauffage dans laquelle l'ensemble ou une partie de l'air d'évacuation de séchoir prélevé peut être chauffé(e) en un courant volumique d'air chaud et dans lequel le courant volumique d'air de recirculation comprend le courant volumique d'air chaud.
